# EUROPEAN PATENT APPLICATION

(11) **EP 3 219 950 A1**
(43) Date of publication of application: **20.09.2017**
(21) Application number: 15858128.0
(22) Date of filing: 05.11.2015
(51) Int. Cl.: F02B 37/18

(54) **WASTE GATE VALVE**

(30) Priority: 10.11.2014 JP 2014228493
(71) Applicant: Taiho Kogyo Co., Ltd, Toyota-shi, Aichi 471-8502 (JP)
(72) Inventor: MURAOKA Kenji, Toyota-shi Aichi 471-8502 (JP)
(74) Representative: Kuhnen & Wacker
(86) International application number: PCT/JP2015/081229
(87) International publication number: WO 2016/076206

(57) **Abstract**

Provided is a waste gate valve capable of absorbing pulsation following the pulsation of a fluid pressure. In a waste gate valve (60), a drive gear (70) is rotationally driven by a drive motor (55), the rotational drive of the drive gear (70) allows a valve shaft (65) engageable with the drive gear (70) to advance or retreat in an axial direction, and the advance or retreat of the valve shaft (65) moves a valve (61) provided at the valve shaft (65) from a valve seat (62) so as to open or close a channel (82). The waste gate valve (60) includes a main spring (91) for urging the valve (61) in a closure direction. Fluid pressure acting on the valve (61) is transmitted to the drive motor (55) as a load. Furthermore, the waste gate valve (60) includes a damper spring (92) for urging the valve (61) in an open direction.

## Description

### TECHNICAL FIELD

The present invention relates to a technique of a waste gate valve.

### BACKGROUND ART

A waste gate valve has been known as a valve having a structure in which a valve is moved from a valve seat so as to open or close a channel (e.g., Patent Literature 1). The waste gate valve is provided in a supercharger, and is adapted to divert a part of exhaust gas so as to adjust an inflow rate of the exhaust gas into a turbine.

The exhaust pressure of the exhaust gas may be pulsated on an exhaust passage, thereby decreasing efficiency of the turbine. In view of this, in order to suppress the pulsation of the exhaust pressure, it may be conceived that the waste gate valve is caused to follow the pulsation of the exhaust pressure to absorb the pulsation of the exhaust pressure. A description will be made below of a waste gate valve 160 exemplifying a conventional waste gate valve.

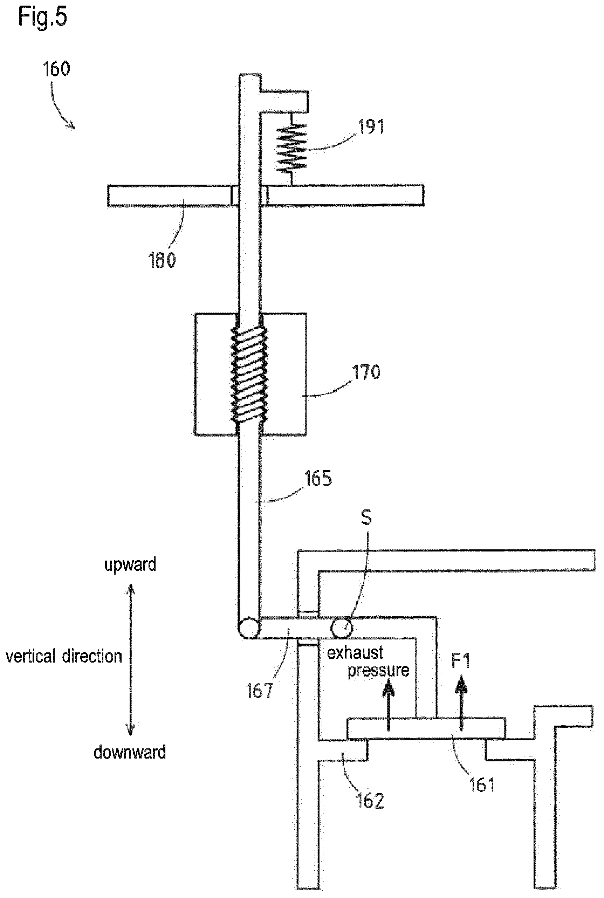

Referring to Fig. 5, description will be made of a configuration of the waste gate valve 160.

Fig. 5 schematically shows the configuration of the waste gate valve 160. Fig. 5 shows a state where a valve 161 is fully closed.

The waste gate valve 160 includes the valve 161, a valve seat 162, a valve shaft 165, a drive gear 170, a valve casing 180, and a main spring 191.

In the waste gate valve 160, the drive gear 170 is rotationally driven by a drive motor, and then, the rotational drive of the drive gear 170 allows the valve shaft 165 to advance or retreat in an axial direction. The advance or retreat of the valve shaft 165 in the axial direction causes an arm 167 to turn about a fulcrum S, so that the valve 161 is moved from the valve seat 162 so as to open or close the channel.

At this time, in the waste gate valve 160, the main spring 191 urges the valve 161, the valve shaft 165, and the drive gear 170 against the valve casing 180 upward in a vertical direction by an urging force F1. An acting force of the exhaust pressure of the exhaust gas passing the channel is urged upward in the vertical direction. Therefore, the waste gate valve 160 is continuously urged upward in the vertical direction.

Since the valve 161 is continuously urged upward in the vertical direction in the waste gate valve 160, the valve 161 cannot follow the pulsation speed of the exhaust pressure. In addition, in the case of the open or closure control of the valve 161 by the drive motor, the valve 161 cannot follow the pulsation speed of the exhaust pressure.

### CITATION LIST

### PATENT LITERATURE

Patent Literature 1: Japanese Patent Application Laid-Open No. 2009-197765

### SUMMARY OF INVENTION

### TECHNICAL PROBLEM

To solve the above problems, an object of the present invention is to provide a waste gate valve capable of following pulsation of a fluid pressure so as to absorb the pulsation.

### SOLUTION TO PROBLEM

In a waste gate valve according to the present invention, it is preferable that a drive gear is rotationally driven by drive means, the rotational drive of the drive gear allows a valve shaft engageable with the drive gear to advance or retreat in an axial direction, and the advance or retreat of the valve shaft moves a valve provided at the valve shaft from a valve seat so as to open or close a channel, the waste gate valve includes first urging means that urges the valve in a closure direction, fluid pressure acting on the valve is transmitted to the drive means as a load, and the waste gate valve includes second urging means that urges the valve in an open direction.

In the waste gate valve according to the present invention, urging forces of the first urging means and the second urging means are determined such that an acting force of the pressure of fluid passing the channel in a state where the valve is fully opened, the urging force of the first urging means, and the urging force of the second urging means balance with each other.

### ADVANTAGEOUS EFFECTS OF INVENTION

According to the waste gate valve of the present invention, it is possible to follow the pulsation of the fluid pressure so as to absorb the pulsation.

### BRIEF DESCRIPTION OF DRAWINGS

Fig. 1 is a schematic view showing a configuration of an engine.
Fig. 2 is a side view showing a configuration of a waste gate valve.
Fig. 3 is a schematic view showing the configuration of the waste gate valve.
Fig. 4 is a schematic view showing an operation of the waste gate valve.
Fig. 5 is a schematic view showing a configuration of a conventional waste gate valve.

### DESCRIPTION OF EMBODIMENT

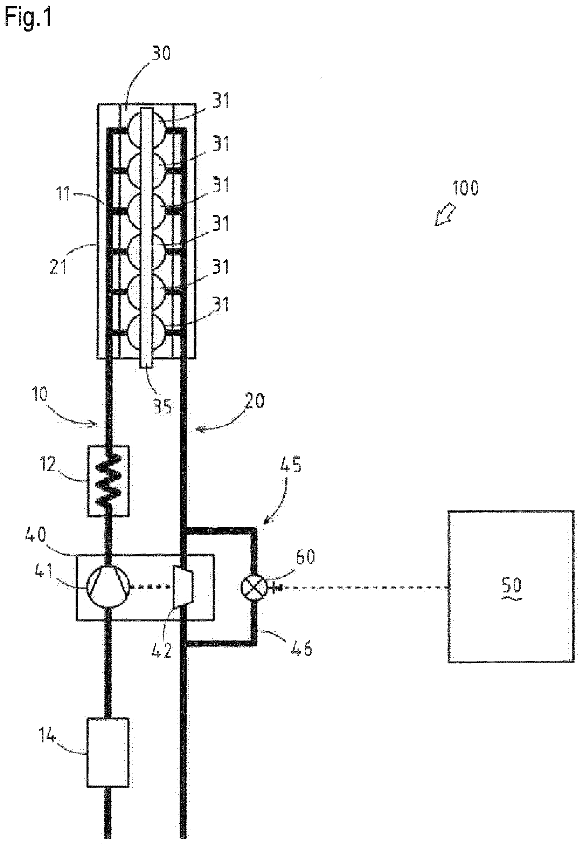

Description will be made of a configuration of an engine 100 with reference to Fig. 1.

In Fig. 1, a block diagram schematically illustrates the configuration of the engine 100. A broken line in Fig. 1 represents an electric signal line.

The engine 100 includes a waste gate valve 60 according to an embodiment of the waste gate valve of the present invention. The engine 100 includes an intake passage 10, an exhaust passage 20, an engine body 30, a supercharger 40, and an engine control unit (hereinafter, referred to as an "ECU") 50 serving as control means. The engine 100 is a direct-injection 6-cylinder diesel engine provided with a supercharger.

The intake passage 10 supplies air to the engine body 30, and is configured by connecting an intake manifold 11, an intercooler 12, a compressor 41, and an air cleaner 14 to an intake pipeline.

The intake manifold 11, the intercooler 12, the compressor 41, and the air cleaner 14 are arranged from the outside toward the engine body 30 in order of the air cleaner 14, the compressor 41, the intercooler 12, and the intake manifold 11. The intake manifold 11, the intercooler 12, the compressor 41, and the air cleaner 14 are connected via the intake pipeline.

The intake manifold 11 is a multiple pipeline for introducing air into cylinders 31, ..., and 31 of the engine body 30. The intercooler 12 is a heat exchanger for cooling air whose temperature is increased due to compression of the compressor 41. The compressor 41 is a component of the supercharger 40, and details of the compressor 41 will be described later. The air cleaner 14 is adapted to separate powdery dust contained in intake air by a filter member made of a nonwoven fabric or the like.

The exhaust passage 20 exhausts air (i.e., exhaust air) from the engine body 30, and is configured by connecting an exhaust manifold 21 and a turbine 42 to exhaust pipelines. The exhaust manifold 21 and the turbine 42 are arranged from the engine body 30 to the outside in order of the exhaust manifold 21 and the turbine 42. The exhaust manifold 21 and the turbine 42 are connected to each other via the exhaust pipelines.

The exhaust manifold 21 is a multiple pipeline for bundling the plurality of exhaust pipelines extending from the cylinders 31, ..., and 31 of the engine body 30. The turbine 42 is a component of the supercharger 40, and details of the turbine 42 will be described later.

The engine body 30 includes a cylinder block (not shown), a cylinder head (not shown), and a fuel injecting apparatus 35. The plurality (six) of cylinders 31, ..., and 31 are formed at the cylinder block. The fuel injecting apparatus 35 injects fuel accumulated on a common rail to respective cylinders by an injector.

The supercharger 40 increases the pressure of the air taken in by the engine 100 up to the atmospheric pressure or higher. The supercharger 40 includes the compressor 41 and the turbine 42. The turbine 42 is adapted to be rotated at a high speed by utilizing internal energy of the exhaust gas to be exhausted through the exhaust pipelines. The compressor 41 is driven by the turbine 42 so as to supply the compressed air to the engine 100 through the intake pipeline.

A bypass passage 45 connects an upstream side and a downstream side of the turbine 42 via a bypass pipeline 46. The waste gate valve 60 is provided in the bypass passage 45. The waste gate valve 60 is adapted to restrict the flow rate of the exhaust air passing the bypass passage 45.

The ECU 50 electronically controls the engine 100 in a comprehensive manner. The ECU 50 is connected to the waste gate valve 60. The ECU 50 has the function of controlling opening and closing of the waste gate valve 60, so as to control the flow rate of the exhaust air passing the bypass passage 45.

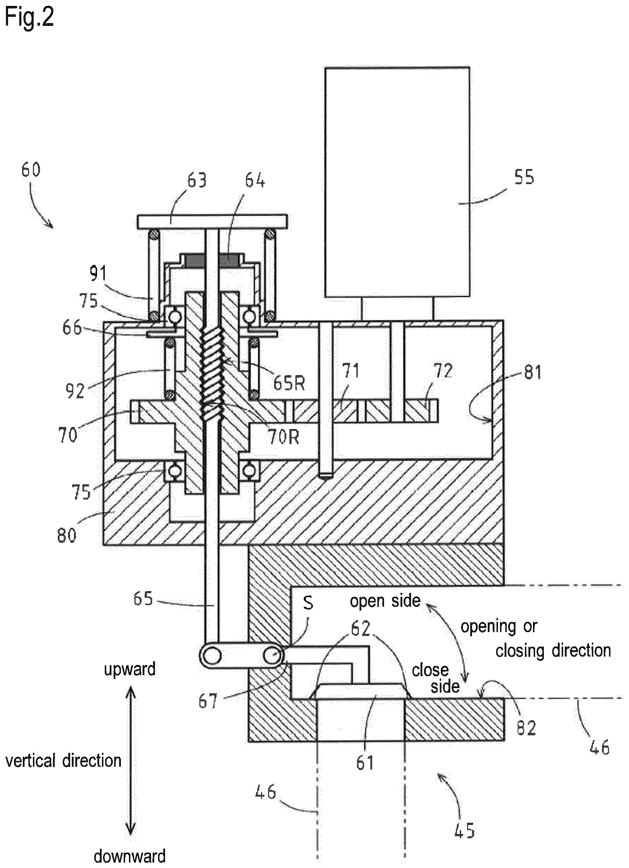

The configuration of the waste gate valve 60 will be described with reference to Fig. 2.

Fig. 2 shows the configuration of the waste gate valve 60, in a side view partly in cross section. Moreover, description will be made below in the vertical direction of Fig. 2.

The waste gate valve 60 includes a drive motor 55 serving as drive means, a valve 61, a valve seat 62, a valve shaft 65, a drive gear 70, a valve casing 80, a main spring 91 serving as first urging means, and a damper spring 92 serving as second urging means.

The valve 61 is adapted to be moved from the valve seat 62 so as to open or close a channel 82 formed at the valve casing 80. The valve 61 is secured to one end of an arm 67 pivotally supported on the valve shaft 65. The valve seat 62 is provided at the middle of the channel 82 formed at the valve casing 80.

The arm 67 is formed into a substantially L shape, and is turnably disposed about a fulcrum S. The arm 67 supports the valve 61 at one end thereof. The other end of the arm 67 is pivotally supported at the lower end of the valve shaft 65.

A housing chamber 81 and the channel 82 are formed in the valve casing 80. The housing chamber 81 is formed above the channel 82. The channel 82 is formed into a substantially L shape. Bypass pipelines 46 are connected to the upstream and the downstream of the channel 82, thus constituting the bypass passage 45.

The valve shaft 65 is adapted to advance or retreat in an axial direction so as to turn the arm 67, thus moving the valve 61 from the valve seat 62. The valve shaft 65 is disposed so as to penetrate the housing chamber 81 and the channel 82 that are formed at the valve casing 80. A spiral portion 65R (i.e., a reed screw) is formed on the middle portion of the valve shaft 65.

The upper portion of the valve shaft 65 extends from the valve casing 80 through the valve casing 80 via a guide bush 64. A flange 63 is provided at the upper tip of the valve shaft 65. The spiral portion 65R is allowed to engage with a spiral portion 70R of the drive gear 70 on the middle portion of the valve shaft 65 in the housing chamber 81, and thus, is disposed so as to penetrate the drive gear 70.

The main spring 91 is interposed between the valve casing 80 and the flange 63 so as to urge the valve 61 and the valve shaft 65 upward against the valve casing 80.

In the drive gear 70, the spiral portion 70R is formed at the inside thereof having a substantially cylindrical shape, and a gear train is formed on the middle portion of the substantially cylindrical shape. The drive gear 70 is supported at the upper and lower ends thereof turnably with respect to the housing chamber 81 (i.e., the valve casing 80) by bearings 75. Moreover, the drive gear 70 is configured so as to be vertically slidable with respect to the bearings 75.

The gear train of the drive gear 70 engages with a pinion 71. The pinion 71 is turnably disposed in the housing chamber 81. The pinion 71 engages with a drive pinion 72. The drive pinion 72 is adapted to be driven by the drive motor 55.

The damper spring 92 is interposed between a bearing plate 66 and the drive gear 70, and urges the drive gear 70 downward against the valve casing 80.

With this configuration, in the waste gate valve 60, the drive pinion 72 is rotationally driven by the drive motor 55. This rotational drive of the drive pinion 72 allows the drive gear 70 to be rotated via the pinion 71. The rotation of the drive gear 70 allows the valve shaft 65 to advance or retreat in an axial direction. The advance or retreat of the valve shaft 65 in the axial direction causes the arm 67 to turn, so that the valve 61 is moved from the valve seat 62 so as to open or close the channel 82.

In the waste gate valve 60, a fluid pressure acting on the valve 61 is transmitted to the drive motor 55 as a load.

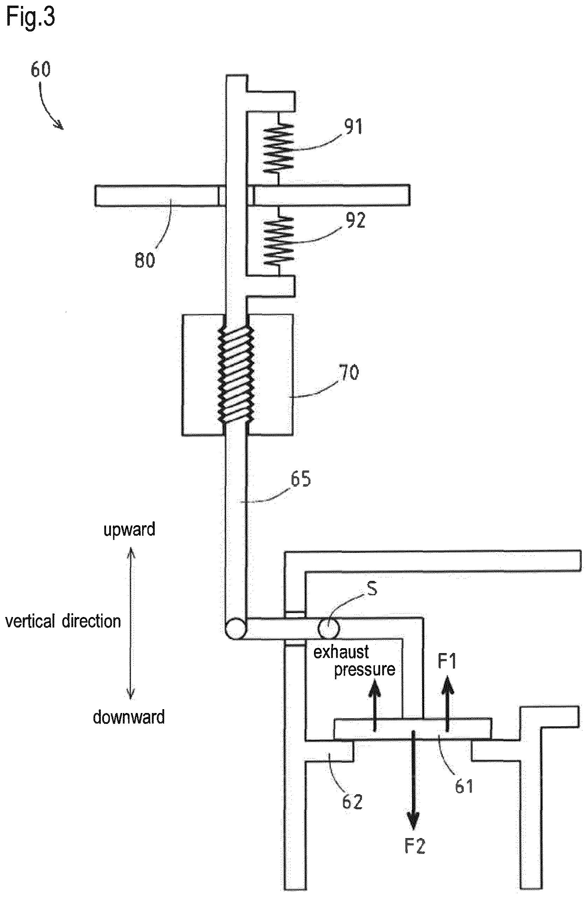

The configuration of the waste gate valve 60 will be described with reference to Fig. 3.

Fig. 3 schematically shows the configuration of the waste gate valve 60. Moreover, the description will be made below in the vertical direction of Fig. 3. In addition, Fig. 3 shows a state where the valve 61 is fully closed.

As described above, the waste gate valve 60 includes the valve 61, the valve seat 62, the valve shaft 65, the drive gear 70, the valve casing 80, the main spring 91 serving as the first urging means, and the damper spring 92 serving as the second urging means.

In the waste gate valve 60, the main spring 91 urges the valve 61, the valve shaft 65, and the drive gear 70 upward against the valve casing 80 by an urging force F1 whereas the damper spring 92 urges the valve 61, the valve shaft 65, and the drive gear 70 downward against the valve casing 80 by an urging force F2.

Here, the loads and spring constants of the main spring 91 and the damper spring 92 are determined such that an acting force of the exhaust pressure of exhaust gas passing the channel 82, where the pressure acts on the valve 61, the urging force F1 of the main spring 91 acting on the valve 61, and the urging force F2 of the damper spring 92 acting on the valve 61 balance with each other in a state where the valve 61 is fully opened.

In other words, the valve 61, the valve shaft 65, and the drive gear 70 are configured such that all of the forces acting on the valve 61, including the acting force of the exhaust pressure of the exhaust gas, balance with each other in the state where the valve 61 is fully opened.

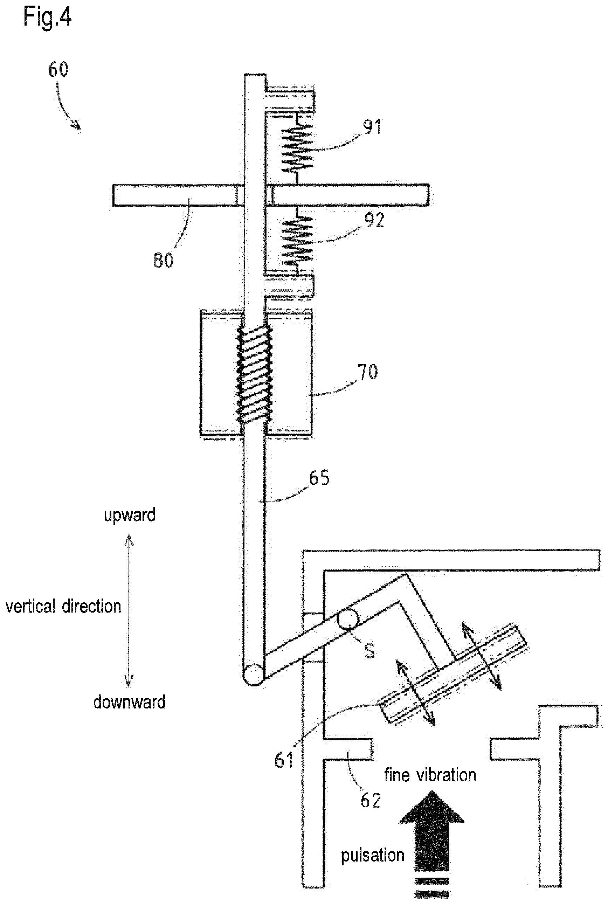

The operation of the waste gate valve 60 will be described with reference to Fig. 4.

Fig. 4 schematically shows the operation of the waste gate valve 60. Moreover, Fig. 4 shows a state where the valve 61 is fully opened.

The waste gate valve 60 is configured such that the valve 61, the valve shaft 65, and the drive gear 70 are configured such that all of the forces acting on the valve 61, including the acting force of the exhaust pressure of the exhaust gas, balance with each other in the state where the valve 61 is fully opened. Thus, the waste gate valve 60 can be finely vibrated at a predetermined open position.

In the waste gate valve 60, the exhaust pressure of the exhaust gas passing the channel 82 may be pulsated. At this time, the waste gate valve 60 is configured so as to be finely vibrated, and therefore, the valve 61 can be finely vibrated in synchronism with the pulsation of the exhaust pressure, so that the fine vibration behavior of the valve 61 can absorb the pulsation of the exhaust pressure.

Description will be made of the effect of the waste gate valve 60.

According to the waste gate valve 60, the pulsation can be absorbed following the pulsation of the exhaust pressure.

In the present embodiment, the waste gate valve according to the present invention is exemplified by the waste gate valve 60. However, the present invention is not limited thereto. The waste gate valve according to the present invention may be used for EGR (Exhaust Gas Recirculation).

### INDUSTRIAL APPLICABILITY

The present invention is applicable to an engine.

### REFERENCE SIGNS LIST

60: Waste gate valve
61: Valve
62: Valve seat
65: Valve shaft
70: Drive gear
80: Valve casing
91: Main spring (first urging means)
92: Damper spring (second urging means)
100: Engine

## Claims

1. A waste gate valve in which a drive gear is rotationally driven by drive means, the rotational drive of the drive gear allows a valve shaft engageable with the drive gear to advance or retreat in an axial direction, and the advance or retreat of the valve shaft moves a valve provided at the valve shaft from a valve seat so as to open or close a channel, the waste gate valve including first urging means that urges the valve in a closure direction, and fluid pressure acting on the valve being transmitted to the drive means as a load,
the waste gate valve comprising second urging means that urges the valve in an open direction.

2. The waste gate valve according to claim 1, wherein urging forces of the first urging means and the second urging means are determined such that an acting force of the pressure of fluid passing the channel in a state where the valve is fully opened, the urging force of the first urging means, and the urging force of the second urging means balance with each other.
